# EUROPÄISCHE PATENTSCHRIFT

(11) **EP 0 956 993 B1**
(45) Veröffentlichungstag und Bekanntmachung des Hinweises auf die Patenterteilung: **05.03.2003**
(21) Anmeldenummer: 99107708.2
(22) Anmeldetag: 17.04.1999
(51) Int. Cl.: B60K 31/00

(54) **Verfahren und Vorrichtung zur Längsgeschwindigkeitssteuerung eines Kraftfahrzeuges**
Process and system for cruise control
Système et méthode de commande de vitesse

(30) Priorität: 15.05.1998 DE 19821803
(43) Veröffentlichungstag der Anmeldung: 17.11.1999
(73) Patentinhaber: DaimlerChrysler AG, 70567 Stuttgart (DE)
(72) Erfinder: Hahn, Stefan, 89075 Ulm/Donau (DE); Kuhn, Friedemann, 70736 Fellbach (DE); Lorenz, Rudolf, 73061 Ebersbach (DE); Mezger, Klaus Dr., 70184 Stuttgart (DE)

(56) Entgegenhaltungen:
- WO-A-93/17406
- DE-A- 19 502 954
- HAMBERGER W ET AL: "NAVIGATIONSSYSTEME ALS DATENBASIS FUER EIN ADAPTIVES ANTRIEBSMANAGEMENT" ATZ AUTOMOBILTECHNISCHE ZEITSCHRIFT, Bd. 98, Nr. 4, 1. April 1996 (1996-04-01), Seiten 218-222, XP000582532 ISSN: 0001-2785

## Beschreibung

Die Erfindung bezieht sich auf ein Verfahren und eine Vorrichtung zur Steuerung der Längsgeschwindigkeit eines Kraftfahrzeuges, wobei durch entsprechende Mittel die Fahrzeugposition ermittelt und ein Geschwindigkeitsvorgabesollwert und/oder ein Geschwindigkeitsvorgabegrenzwert in Abhängigkeit von der ermittelten Fahrzeugposition für die Längsgeschwindigkeitssteuerung vorgegeben wird. Der Begriff Steuerung umfaßt vorliegend in seinem weiten Sinne auch Regelungen.

Verfahren und Vorrichtungen gemäß der Oberbegriffe der unabhängigen Ansprüche 1 und 9 sind in verschiedenen Ausprägungen bekannt. So werden bei einem in der Offenlegungsschrift WO 88/05199 offenbarten System oder einem System gemäß HAMBERGER W ET AL: 'NAVIGATIONSSYSTEME ALS DATENBASIS FUER EIN ADAPTIVES ANTRIEBSMANAGEMENT' ATZ AUTOMOBILTECHNISCHE ZEITSCHRIFT, Bd. 98, Nr. 4, 1. April 1996 (1996-04-01), Seiten 218-222, XP000582532 ISSN: 0001-2785 zusätzlich zu geographischen Daten einer elektronischen Straßenkarte sicherheitsrelevante Daten, die unter anderem auch relevant für die Steuerung der Längsgeschwindigkeit sind, vorab abgespeichert und beim Befahren der betreffenden Streckenabschnitte abgerufen. Bei Systemen, wie sie in den Offenlegungsschriften DE 42 01 142 A1, DE 195 02 954 A1 und WO 93/17406 sowie der Patentschrift DE 195 06 364 C2 beschrieben sind, werden für die Längsgeschwindigkeitssteuerung relevante Geschwindigkeitssollwert- und/oder Geschwindigkeitsgrenzwertdaten aus den geometrischen Daten einer digital abgespeicherten Wegenetzkarte ermittelt. Speziell wird dabei in der genannten DE 195 02 954 A1 vorgeschlagen, spezifische strekkenabhängige Kennwerte über den Streckenverlauf, wie Krümmungsverläufe, Kurvenradien und Gierwinkelwerte, beim erstmaligen Durchfahren einer oft zu befahrenden Strecke zu ermitteln und abzuspeichern. Bei aktiver Geschwindigkeitsregelung ist dann vom Fahrer ein erster Geschwindigkeits-Sollwert vorzugeben, und das System ermittelt anhand der abgespeicherten Kennwerte einen zugehörigen zweiten Geschwindigkeits-Sollwert, der mit dem ersten verglichen wird, woraufhin der kleinere von beiden als tatsächlicher Geschwindigkeits-Sollwert herangezogen wird. Aus den Patentschriften DE 34 38 385 C2 und EP 0 188 455 B1 sind Systeme bekannt, bei denen solche längsgeschwindigkeitsrelevanten Daten, insbesondere hinsichtlich Vorgabe von Geschwindigkeitsgrenzwerten, von streckenseitig angeordneten Speichereinheiten angezeigt und durch entsprechende fahrzeugseitige Leseeinheiten abgelesen werden können. Ein weiteres System dieser Art ist in der Offenlegungsschrift DE 33 08 803 A1 offenbart, wobei dort zusätzlich eine fahrzeugspezifisch kodierte Identitätskarte vorgesehen ist, in die verschiedene Fahrzustände des Kraftfahrzeugs frei oder fest einprogrammierbar sind, wie z.B. eine maximale Fahrgeschwindigkeit oder eine maximale Längs- oder Querbeschleunigung. Auf diese Weise soll unter anderem die maximal mögliche Fahrgeschwindigkeit den äußeren Umständen und dem Fahrvermögen des Fahrers angepaßt werden können.

In der Patentschrift DE 38 17 495 C2 ist ein System offenbart, bei dem auf den jeweiligen Benutzer bezogene Daten bezüglich elektronisch steuerbarer Funktionen eines Kraftwagens in benutzerindividuell zugeordneten Speichereinheiten abrufbar abgespeichert werden. Soweit die elektronisch steuerbaren Funktionen solche für einen Antriebsstrang und damit längsgeschwindigkeitsrelevante Funktionen betreffen, wird vorgeschlagen, das diesbezügliche Fahrverhalten des jeweiligen Benutzers kontinuierlich zu überwachen, einer von mehreren vorgebbaren Fahrverhaltenskategorien zuzuordnen und die Zugehörigkeit zur betreffenden Kategorie abzuspeichern. Die Speichereinheiten können in benutzerseitigen, zum Fahrzeug gehörigen, elektronischen Schlüsseleinheiten untergebracht sein.

Der Erfindung liegt als technisches Problem die Bereitstellung eines Verfahrens und einer Vorrichtung der eingangs genannten Art zugrunde, die eine vorteilhafte, neuartige Längsgeschwindigkeitssteuerung für wiederholt befahrene Fahrtstrecken ermöglichen.

Die Erfindung löst dieses Problem durch die Bereitstellung eines Verfahrens mit den Merkmalen des Anspruchs 1 sowie einer Vorrichtung mit den Merkmalen des Anspruchs 6. Beim Verfahren nach Anspruch 1 werden im laufenden Fahrbetrieb Geschwindigkeitsdaten über den Istwert und/oder einen eingestellten Sollwert und/oder einen eingestellten Grenzwert der Fahrzeuglängsgeschwindigkeit in Abhängigkeit von der Fahrzeugposition erfaßt, und der Vorgabesollwert und/oder der Vorgabegrenzwert für die Längsgeschwindigkeitssteuerung wird aus den für die jeweilige Fahrzeugposition während einer oder mehrerer vorheriger Fahrten aufgezeichneten Geschwindigkeitsdaten ermittelt.

Der Geschwindigkeitsvorgabesollwert bzw. -grenzwert wird als wählbarer Percentilwert aus mehreren, während vorhergehender Fahrten erfaßten Werten der Istgeschwindigkeit oder der Sollgeschwindigkeit bzw. der Grenzgeschwindigkeit bestimmt, wobei die Ist- oder Soll- bzw. Grenzgeschwindigkeitswerte aller vorausgegangener Fahrten oder klassifiziert nach den erwähnten variablen Geschwindigkeitseinflußgrößen, insbesondere hinsichtlich Vorliegens des Zustands freier Fahrt, berücksichtigt werden. Zur Durchführung dieses Verfahrens eignet sich eine nach Anspruch 6 weitergebildete Vorrichtung, wozu insbesondere deren Vorgabemittel geeignet ausgelegt sind.

Diese Vorgehensweise nutzt gedächtnisartig die vom Fahrer in der Vergangenheit auf einer jeweiligen Wegstrecke gewählte Istgeschwindigkeit und/oder Sollgeschwindigkeit und/oder Grenzgeschwindigkeit unter Abspeicherung dieser Informationen dazu, bei einem erneuten Befahren des betreffenden Streckenabschnitts einen geeigneten Sollwert und/oder Grenzwert für die Längsgeschwindigkeitssteuerung abzuleiten und vorzugeben. Die dazu im einzelnen zu verwendenden Mittel sind als solche dem Fachmann beispielsweise aus herkömmlichen Navigations- und Abstandsregelsystemen geläufig, insbesondere geeignete Fahrzeugpositionsbestimmungsmittel, Längsgeschwindigkeitssteuermittel, z.B. solche, die selbsttätig in den Antriebsstrang und/oder die Bremsanlage eingreifen, und Datenspeichermittel zur Aufzeichnung der relevanten Daten. Charakteristischerweise sind entsprechend ausgelegte Vorgabemittel vorgesehen, welche aus den erfaßten Geschwindigkeitsdaten den Geschwindigkeitsvorgabesollwert und/oder Geschwindigkeitsvorgabegrenzwert für den jeweils gerade befahrenen Streckenabschnitt gewinnen und den Geschwindigkeitssteuermitteln vorgeben, mindestens in Form entsprechender Hinweise für den Fahrzeugführer und vorzugsweise in Form von direkt einer Einrichtung zur selbsttätigen Längsgeschwindigkeitssteuerung zugeführten Sollwert- bzw. Begrenzungssignalen. Mit einer solchen selbsttätigen Steuerungseinrichtung ist eine vom Fahrzeugführer weitgehend unabhängige, gedächtnisgestützte Längsgeschwindigkeitssteuerung realisierbar. Dabei können die beim Abruf der gespeicherten Vorgaben eintretenden Grenz- bzw. Sollwertsänderungen dem Fahrer durch geeignete optische, haptische oder akustische Mittel angezeigt werden.

Bei einem nach Anspruch 2 weitergebildeten Verfahren erfolgt das Abspeichern der Geschwindigkeitsdaten und das Vorgeben des Geschwindigkeitsvorgabesollwertes und/oder Geschwindigkeitsvorgabegrenzwertes in Abhängigkeit eines oder mehrerer variabler, während der Fahrt laufend sensierter Geschwindigkeitseinflußgrößen. Solche variablen Einflüsse sind z.B. die Geschwindigkeit des vorausfahrenden Verkehrs, Witterung, Wechselverkehrszeichen und Lichtsignalanlagen. Die Berücksichtigung dieser Einflußgrößen vermeidet, daß die Vorgabe des Geschwindigkeitsvorgabesollwertes und/oder Geschwindigkeitsvorgabegrenzwertes während einer Fahrt anhand von Geschwindigkeitsdaten erfolgt, die zuvor während einer Fahrt unter ganz anderen Bedingungen aufgezeichnet worden sind. Vielmehr werden hierfür dann gezielt die zuvor unter denselben oder jedenfalls weitestgehend ähnlichen Bedingungen aufgezeichneten Daten herangezogen. Eine nach Anspruch 7 weitergebildete Vorrichtung eignet sich zur Durchführung dieses Verfahrens, wozu sie insbesondere die erforderlichen Sensormittel zur Erfassung der berücksichtigten Geschwindigkeitseinflußgrößen beinhaltet.

Bei einem nach Anspruch 3 weitergebildeten Verfahren wird für diejenigen Streckenabschnitte, für die noch keine Geschwindigkeitsdaten einer vorherigen Fahrt auswertbar vorliegen, der Geschwindigkeitsvorgabesollwert und/oder Geschwindigkeitsvorgabegrenzwert aus vorab für das betrachtete Wegenetz streckenspezifisch abgespeicherten Sollgeschwindigkeits- bzw. Grenzgeschwindigkeits-Vorgabedaten oder implizit aus den geometrischen Daten eines abgespeicherten Wegenetzes selbst abgeleitet. Damit kann auch für den Fall eines erstmaligen Befahrens eines Streckenabschnitts eine brauchbare Soll- bzw. Grenzwertvorgabe für die Längsgeschwindigkeitssteuerung bereitgestellt werden. Zur Durchführung dieses Verfahrens eignet sich eine nach Anspruch 8 weitergebildete Vorrichtung, die hierzu insbesondere geeignet in Speichermitteln vorab abgelegte Geschwindigkeitsdaten bzw. Wegenetzdaten beinhaltet.

Bei einem nach Anspruch 4 weitergebildeten Verfahren besteht die Möglichkeit, für eine jeweilige Fahrzeugposition mehrere parallele Vorgaberohwerte aus während vorheriger Fahrten erfaßten Geschwindigkeitsdaten und ggf. vorab streckenbezogen explizit abgelegten oder aus geometrischen Wegenetzdaten implizit ermittelten Geschwindigkeitsdaten bereitzustellen und aus diesen gemäß einer vorgebbaren Prioritätslistede den jeweils prioritätshöchsten vorhandenen Rohwert als Geschwindigkeitsvorgabesollwert bzw. Geschwindigkeitsvorgabegrenzwert auszuwählen.

Bei einem nach Anspruch 5 weitergebildeten Verfahren ist eine fahrerspezifische oder übertragbare Wahl des streckenabhängigen Geschwindigkeitsvorgabesollwertes bzw. Geschwindigkeitsvorgabegrenzwertes vorgesehen, so daß für jeden Fahrer eines Fahrzeugs ein ihm genehmes oder ein auf verschiedene Fahrzeuge übertragbares Geschwindigkeitsprofil für die Fahrzeuglängsgeschwindigkeitssteuerung zur Verfügung steht. Zur Durchführung dieses Verfahrens eignet sich eine nach Anspruch 9 weitergebildete Vorrichtung, die hierzu fahrerbezogen getrennte, fahrzeugseitig angeordnete Speicherbereiche oder Speichereinheiten oder aber alternativ hierzu fahrerseitige, in elektronischen Schlüsseln oder dergleichen untergebrachte oder fahrzeugexterne, in verschiedenen Fahrzeugen benutzbare Speichereinheiten aufweist.

Eine vorteilhafte Ausführungsform der Erfindung ist in der Zeichnung dargestellt und wird nachfolgend beschrieben.

Die einzige Figur zeigt ein Blockdiagramm einer Vorrichtung zur Steuerung der Längsgeschwindigkeit eines Kraftfahrzeuges, die eine Geschwindigkeitsgedächtnisfunktionalität umfaßt.

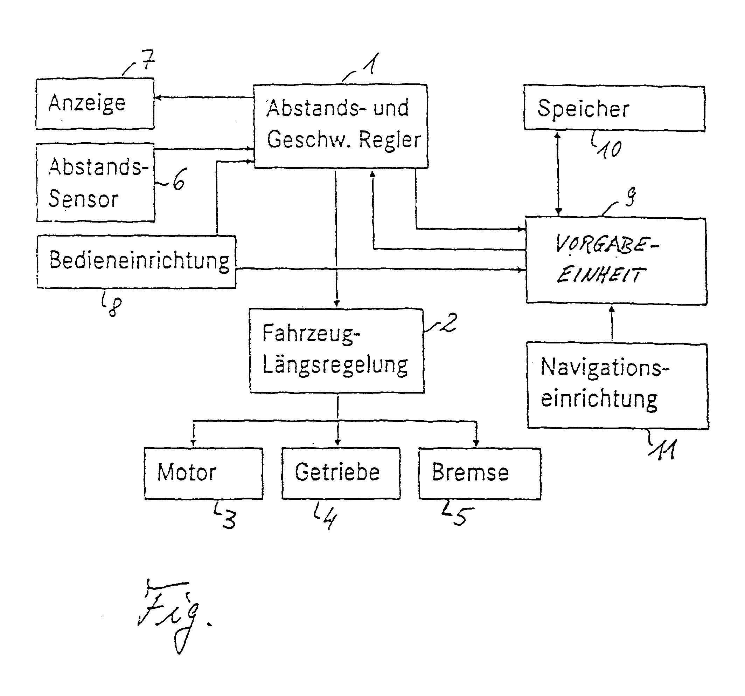

Die in Fig. 1 schematisch als Blockdiagramm gezeigte Vorrichtung ist beispielsweise in Straßenfahrzeugen einsetzbar. Sie beinhaltet zum einen eine herkömmliche Einrichtung zur selbsttätigen Abstands- und Geschwindigkeitsregelung, auch Abstandsregeltempomat genannt. Dieser Abstandsregeltempomat umfaßt einen Abstands- und Geschwindigkeitsregler 1, eine von diesem ansteuerbare Einheit 2 zur Regelung der Fahrzeuglängsgeschwindigkeit, die ihrerseits längsgeschwindigkeitsregelnd auf den Betrieb eines Motors 3, die Schaltung eines Getriebes 4 und die Betätigung einer Bremsanlage 5 einwirkt, einen Abstandssensor 6 zur Erfassung des Abstands zu vorausfahrenden Fahrzeugen, eine optische und/oder akustische Anzeigeeinheit 7 zum Anzeigen des momentanen Zustands der Abstands- und Geschwindigkeitsregelung sowie eine Bedieneinrichtung 8, über die der Fahrzeugführer den Abstands- und Geschwindigkeitsregler 1 aktivieren und deaktivieren sowie diesem gewünschte Sollwerte vorgeben kann, insbesondere eine gewünschte Sollgeschwindigkeit und/oder eine gewünschte obere Grenzgeschwindigkeit und/oder einen gewünschten Sollabstandswert. Bei aktivierter Abstands- und Geschwindigkeitsregeleinrichtung 1 bis 8 ist diese in der Lage, das Fahrzeug selbsttätig so zu führen, daß bestimmte Abstände zu vorausfahrenden Fahrzeugen und/oder vorgegebene Soll- oder Grenzgeschwindigkeitswerte für die Längsgeschwindigkeit und bei Bedarf auch für die Quergeschwindigkeit eingehalten werden. Es sind bereits eine Vielzahl verschiedener Typen solcher Abstands- und Geschwindigkeitsregeleinrichtungen bekannt, worauf vorliegend hinsichtlich weiterer Details verwiesen werden kann.

Zum anderen beinhaltet die gezeigte Vorrichtung charakteristischerweise Mittel zur Realisierung einer Geschwindigkeitsgedächtnisfunktionalität, um Soll- und/oder Grenzgeschwindigkeitswerte in Abhängigkeit von der momentanen Fahrzeugposition für die Abstands- und Geschwindigkeitsregeleinrichtung basierend auf Geschwindigkeitsdaten vorgeben zu können, die während einer oder mehrerer vorangegangener Fahrten auf derselben Fahrtstrecke aufgenommen wurden. Diese Mittel umfassen eine Rechnereinheit in Form einer (Geschwindigkeits-)Vorgabeeinheit 9, daran anschließbare Speichermittel 10 und eine Navigationseinrichtung 11 herkömmlicher Bauart. Die Navigationseinrichtung 11 erfaßt laufend die Fahrzeugposition, z.B. mittels eines GPS-Empfängers, und gibt dem Fahrer Navigationsinformationen, z.B. Routenempfehlungen zur Erreichung eines gewünschten Zielorts, wozu sie das vom Fahrzeug befahrbare Wegenetz in digital abgespeicherter Form enthält. Anstelle der Navigationseinrichtung 11 kann selbstverständlich jedes andere herkömmliche Fahrzeugpositionsbestimmungsmittel treten. Dabei müssen die Fahrzeugpositionsbestimmungsmittel nicht unbedingt die aktuelle Fahrzeugposition als geodätische Koordinate oder Position auf einer abgespeicherten digitalen Straßenkarten identifizieren können. Es reicht vielmehr aus, daß sie in der Lage sind, eine einmal gefahrene Strekke wiederzuerkennen. Dieses läßt sich auf einfache Weise auch z.B. durch Abspeichern und Vergleichen des Krümmungsprofils der jeweils abgespeicherten Strecke, etwa geschätzt aus den Signalen eines Gierratensensors, Raddrehzahldifferenzen oder Lenkradwinkels, erreichen, so daß auch ohne vollständiges Navigationssystem die Erinnerungsfunktion einfach realisierbar ist. In jedem Fall erhält die Vorgabeeinheit 9 hierüber die Information über die momentane Fahrzeugposition auf einer schon einmal gefahrenen Strecke.

Die Vorgabeeinheit 9 steuert das Erfassen der benötigten Geschwindigkeitsdaten während einer Fahrt und das Abspeichern dieser Daten oder daraus abgeleiteter Geschwindigkeitssollwert- und/oder Geschwindigkeitsgrenzwertdaten in den Speichermitteln 10 und das Abrufen dieser Daten zwecks Vorgabe entsprechender Geschwindigkeitsvorgabesollwerte und/oder Geschwindigkeitsvorgabegrenzwerte für die Abstands- und Geschwindigkeitsregeleinrichtung. Der Fahrer kann über die Bedieneinrichtung 8 die Vorgabeeinheit 9 zum Starten und Beenden derartiger Datenaufzeichnungs- und Datenabrufprozesse ansteuern. Vorzugsweise beinhaltet die Bedieneinrichtung 8 zur Ansteuerung der Datenaufzeichnungs- und Datenabruffunktionalitäten der Vorgabeeinheit 9 ein Bedienmodul mit sinnfälligem, von magnetischen Aufzeichnungsgeräten, wie Tonband- und Kassettengeräten, geläufigen Symbolen in räumlicher Nachbarschaft zu Bedienelementen für den Abstands- und Geschwindigkeitsregler 1.

Vom Abstands- und Geschwindigkeitsregler 1 erhält die Vorgabeeinheit 9 die erforderlichen längsgeschwindigkeitsrelevanten Daten, insbesondere je nach Systemauslegung den am Regler 1 momentan eingestellten Längsgeschwindigkeitssollwert und/oder einen eingestellten oberen Längsgeschwindigkeitsgrenzwert, d.h. eine momentan maximal zulässige Längsgeschwindigkeit. Daneben erhält die Vorgabeeinheit 9 vom Abstands- und Geschwindigkeitsregler 1 die Information über den momentanen Abstandswert der Abstandsregelung. Die Vorgabeeinheit 9 erkennt daraus, ob das eigene Fahrzeug gerade einem vorausfahrenden Fahrzeug mit geregeltem Abstand folgt oder ob ein Zustand freier Fahrt, d.h. ohne vorausfahrendes Fahrzeug, vorliegt. Das Kriterium freier oder nicht-freier Fahrt bildet eine variable Einflußgröße, nach welcher die geschwindigkeitsrelevanten Daten in der Vorgabeeinheit 9 getrennt ausgewertet, abgespeichert und abgerufen werden. Dies trägt der Tatsache Rechnung, daß ein an einer bestimmten Stelle im Fall nicht-freier Fahrt von der Abstandsregelung eingestellter Geschwindigkeitssollwert nicht unbedingt gut als Vorgabewert für ein späteres Befahren derselben Stelle geeignet ist, wenn zu diesem späteren Zeitpunkt der Zustand freier Fahrt gegeben ist. Dazu wird das Kriterium freier Fahrt geeignet detektiert, z.B. durch Erfassen und Bewerten des Abstands zum vorausfahrenden Fahrzeug bei bekannter Fahrgeschwindigkeit. Je nach Bedarf können weitere variable Einflußgrößen in nicht näher gezeigter, herkömmlicher Weise sensorisch erfaßt und von der Vorgabeeinheit 9 berücksichtigt werden, wie z.B. die Witterung mittels einer Regen- oder Reifenreibwertsensorik oder das Vorhandensein und der Anzeigezustand von Wechselverkehrszeichen und/oder Lichtsignalanlagen. Der gesamte Satz variabler Einflußgrößen wird in Klassen unterteilt, und die Vorgabeeinheit 9 nimmt das Auswerten, Abspeichern und Abrufen der zur Erfüllung ihrer Geschwindigkeitsgedächtnisfunktionalität benötigten Daten getrennt für jede dieser Klassen vor.

Bei aktivierter Datenaufzeichnungsfunktionalität stellt die Vorgabeinheit 9 über die Navigationseinrichtung 11 die momentane Fahrzeugposition und über die entsprechenden Sensormittel die Momentanwerte der variablen Einflußgrößen und damit deren momentan relevante Klasse fest und speichert die ihr vom Abstands- und Geschwindigkeitsregler 1 zugeführten Sollwert- und/oder Grenzgeschwindigkeitsinformationen für den momentanen Fahrzeugort und die momentane Einlußgrößenklasse in den Speichermitteln 10 ab. Bei aktivierter Datenabruf- bzw. Geschwindigkeitsvorgabefunktionalität stellt die Vorgabeeinheit 9 wiederum die Fahrzeugposition und die momentan relevante Klasse der variablen Einflußgrößen fest, ruft aus den Speichermitteln 10 die für die festgestellte Fahrzeugposition und die festgestellte Klasse der variablen Einflußgrößen vorab aufgezeichneten Geschwindigkeitsdaten ab und ermittelt daraus einen Geschwindigkeitsvorgabesollwert und/oder Geschwindigkeitsvorgabegrenzwert, den bzw. die sie dann als entsprechende Einstellempfehlungen an den Abstands- und Geschwindigkeitsregler 1 abgibt. Dieser berücksichtigt die aus einer oder mehreren vorherigen Fahrten abgeleiteten Soll- und/oder Grenzwertempfehlungen für die Steuerung der Fahrzeuglängsgeschwindigkeitkeit. Alternativ zur direkten Abspeicherung von während der Fahrt aufgenommenen Geschwindigkeitsdaten und deren Auswertung zur Gewinnung der Soll- und/oder Grenzgeschwindigkeitsempfehlungen kann vorgesehen sein, diese Auswertung unmittelbar bei Erfassung der Geschwindigkeitsdaten vorzunehmen und die so gewonnenen Vorgabesollwerte bzw. -grenzwerte abzuspeichern, um sie bei einer späteren Fahrt aus den Speichermitteln 10 abzurufen und unmittelbar dem Abstands- und Geschwindigkeitsregler 1 zuzuführen.

Alternativ oder zusätzlich zur beschriebenen direkten Detektion der variablen Geschwindigkeitseinflüsse kann vorgesehen werden, daß die Vorgabeeinheit 9 aufgezeichnete Geschwindigkeitsdaten mehrerer vorangegangener Fahrten für die Ermittlung der Vorgabesollwerte und/oder Vorgabegrenzwerte berücksichtigt, z.B. indem sie die Vorgabewerte anhand einer statistischen Methode aus mehreren vorangegangenen Fahrten ableitet. Beispielsweise kann der Vorgabewert gleich einem vorgebbaren Percentilwert, z.B. 90%, gesetzt werden, der vom entsprechenden Bruchteil zuvor aufgezeichneter Geschwindigkeitswerte unterschritten wird.

Bevorzugt arbeitet die Vorgabeeinheit 9 personalisiert, d.h. sie ist so ausgelegt, daß sie Aufzeichnung und Vorgabe von Geschwin-digkeitsdaten für jeden Fahrer getrennt vornimmt, so daß die Geschwindigkeitsempfehlungen der Vorgabeeinheit 9 an den Abstands- und den Geschwindigkeitsregler 1 für jeden Fahrer nach seinem persönlichen Geschwindigkeitsprofil erfolgen, das sich aus den für ihn bislang aufgezeichneten Geschwindigkeitsdaten ergibt. Die Erkennung des jeweiligen Fahrers kann in einer der herkömmlichen Arten automatisch, z.B. durch Nutzung sogenannter Keyless-Entry-Systeme, erfolgen, oder es ist eine entsprechende Einstelleinheit vorgesehen, an welcher der Fahrer sein Geschwindigkeitsprofil auswählen kann. Die Abspeicherung der Geschwindigkeitsdaten für die verschiedenen Fahrer kann in unterschiedlichen fahrzeugseitigen Speicherbereichen der Speichermittel 10 erfolgen. Alternativ beinhalten die Speichermittel 10 einzelne, in elektronischen, von den verschiedenen Fahrzeugnutzern mitgeführten Schlüsseln untergebrachte Speichereinheiten, in denen die Geschwindigkeitsdaten je eines Fahrers abgelegt werden. Im Fall dieser personalisierten Systemauslegung ist es zudem möglich, die Längsgeschwindigkeitssteuerung für die verschiedenen Fahrzeugnutzer bewußt unterschiedlich zu gestalten, indem z.B. der Fahrzeugbesitzer in die Lage versetzt wird, für bestimmte Nutzer seines Fahrzeugs auf bestimmten Strecken die Höchstgeschwindigkeit individuell zu beschränken. Optional ist zudem ein Schutz der aufgezeichneten Geschwindigkeitsdaten vor mißbräuchlicher Benutzung vorgesehen, z.B. mittels eines Paßwortschutzes für die Inbetriebnahme der Vorgabeeinheit 9 ähnlich einem herkömmlichen Diebstahlschutz für Autoradios. Dieser Fremdnutzungsschutz kann je nach Systemauslegung auf Anforderung oder bei Detektion einer Unfallsituation aktiviert werden.

Bei Bedarf kann des weiteren vorgesehen sein, die aufgezeichneten Vorgabedaten, die ein bestimmtes Fahrprofil für eine vorgegebene Strecke repräsentieren, so abzuspeichern, daß sie übertragbar und/oder einer Bearbeitung zugänglich sind. So ist z.B. die Abspeicherung auf einem mobilen Datenträger, z.B. in einem elektronischen Schlüssel, oder in Keyless-Entry-Systemen möglich, die eine Fahrberechtigung für mehrere Fahrzeuge enthalten. Der Fahrer kann in diesem Fall die anhand einer vorangegangenen Fahrt aufgezeichneten Vorgabedaten für das spätere Befahren der Strecke mit einem beliebigen anderen Fahrzeug übernehmen, wobei natürlich auch der Fahrer wechseln kann. Vorteilhaft hinsichtlich Gewährleistung einer solchen Übertragbarkeit und gleichzeitiger Begrenzung des fahrzeugseitigen Speicherbedarfs kann auch eine Abspeicherung der Vorgabedaten in einer externen Datenbank, z.B. über das Internet, sein, auf die vom Fahrzeug über geeignete herkömmliche Kommunikationsmittel, wie Mobilfunk etc., zugegriffen werden kann. Auf Wunsch kann vorgesehen sein, daß die abgespeicherten Vorgabedaten mittels eines Personalcomputers nachbearbeitet werden können. Durch diese in der einen oder anderen Weise erzielbare, flexible Speicherung der Vorgabedaten ist ein Fahrzeugbesitzer, z.B. ein Taxi- oder Speditionsunternehmer, in der Lage, den Benutzern seiner Fahrzeuge unter z.B. verbrauchsoptimalen Gesichtspunkten zuvor aufgezeichnete Geschwindigkeitsprofile für eine zu befahrende Strecke anhand der abgespeicherten Vorgabedaten zur Verfügung zu stellen oder vorzugeben.

Für die Ermittlung der Vorgabesollwerte bzw. Vorgabegrenzwerte als Empfehlung der Vorgabeeinheit 9 an den Abstands- und Geschwindigkeitsregler 1 in Abhängigkeit von der Fahrzeugposition und damit der vom Fahrzeug befahrenen Fahrstrecke gibt es mehrere Möglichkeiten, von denen je nach Bedarf eine oder mehrere in der Vorgabeeinheit 9 implementiert sein können. Sind parallel mehrere Möglichkeiten implementiert, so kann in der Vorgabeeinheit 9 eine Priorisierung derselben vorgesehen sein, bei der immer die prioritätshöchste Möglichkeit gewählt wird, soweit hierfür bereits aufgezeichnete Daten aus einer oder mehreren vorangegangenen Fahrten zur Verfügung stehen. Nachstehend werden beispielhaft mehrere solche Möglichkeiten erläutert, von denen alle oder nur ein Teil parallel vorgesehen sein können, wobei dann vorzugsweise von einer jeweils zuvor genannten Möglichkeit mit höherer Priorität Gebrauch gemacht wird als von einer danach genannten Möglichkeit.

Eine erste Möglichkeit besteht darin, daß der Fahrer explizit durch Eingabe eines entsprechenden Steuerbefehls and der Bedieneinrichtung 8 die Aufzeichnung des gegenwärtig am Abstands- und Geschwindigkeitsregler 1 eingestellten Geschwindigkeitssollwertes und/oder Geschwindigkeitsgrenzwertes auslöst und diese aufgezeichneten, ortsabhängigen Geschwindigkeitswerte bei einem nachfolgenden Befahren derselben Fahrstrecke als Vorgabesollwerte bzw. Vorgabegrenzwerte benutzt werden.

Bei einer zweiten Möglichkeit wird per Fahrerbefehl der Istwert der Fahrzeuglängsgeschwindigkeit während der Fahrt aufgezeichnet und bei einer späteren Fahrt als Vorgabesollwert herangezogen. Das Aufzeichnen dieser Daten erfolgt vorzugsweise abhängig vom Kriterium freier oder nicht-freier Fahrt, das hierzu geeignet überwacht wird.

Bei einer dritten Möglichkeit wird ohne expliziten Fahrerbefehl die vom Fahrer am jeweiligen Fahrzeugort letztmals eingestellte Sollgeschwindigkeit oder Grenzgeschwindigkeit als Vorgabesollwert bzw. Vorgabegrenzwert für die momentane Fahrt verwendet.

In einer vierten Möglichkeit ist vorgesehen, als Vorgabesollwert bzw. Vorgabegrenzwert den 90%-Percentilwert aus mehreren zuvor für den betreffenden Streckenabschnitt aufgezeichneten, vom Fahrer eingestellten Sollwerten bzw. Grenzwerten zu wählen. Mit dieser Vorgehensweise wird variablen Einflüssen in statistischer Weise Rechnung getragen und verhindert, daß in speziellen Ausnahmesituationen gewählte, untypische Soll- oder Grenzwerte als Vorgabewerte für die nächste Fahrt beibehalten werden.

Bei einer fünften Möglichkeit wird von der Detektion des Zustands freier Fahrt Gebrauch gemacht, indem als Vorgabesollwert derjenige Sollwert herangezogen wird, der zuletzt beim Befahren des entsprechenden Streckenabschnitts für den Fall erfaßt und abgespeichert wurde, daß der Zustand freier Fahrt vorgelegen hat. Der Abstandsregeltempomat übernimmt diesen Vorgabewert für die aktuelle Fahrt als ortsabhängigen Sollwert in den Betriebsphasen freier Fahrt, in denen er die Längsgeschwindigkeit nicht so regelt, daß einem vorausfahrenden Fahrzeug mit konstantem Abstand gefolgt wird.

In einer sechsten Möglichkeit wird analog zur vierten Möglichkeit nicht der zuletzt bei freier Fahrt an der entsprechenden Stelle vorliegende Sollwert, sondern der 90%-Percentilwert aller zuvor bei freien Fahrten an dieser Stelle eingestellten und aufgezeichneten Sollwerte als Vorgabesollwert gewählt.

Bei einer siebten Möglichkeit wird die an der entsprechenden Stelle zuletzt vorliegende Istgeschwindigkeit aufgezeichnet und als Vorgabesollwert für das nächste Befahren dieses Streckenabschnitts benutzt.

In einer Variante hiervon wird als achte Möglichkeit analog zur vierten Möglichkeit nicht die zuletzt gefahrene Istgeschwindigkeit, sondern der 90%-Percentilwert aller an dieser Stelle zuvor gefahrenen Istgeschwindigkeiten als Vorgabesollwert für die aktuelle Fahrt gewählt.

Da beim erstmaligen Befahren einer Strecke noch keine aufgezeichneten Geschwindigkeitsdaten aus vorangegangenen Fahrten für den betreffenden Streckenabschnitt vorhanden sind, ist als neunte Möglichkeit vorgesehen, ortsabhängig zusammen mit digitalen Wegenetzkarten explizit zugehörige Vorgabesollwerte und/oder Vorgabegrenzwerte für die Längsgeschwindigkeit vorab abzuspeichern und diese für die aktuelle Fahrt wenigstens insoweit zu verwenden, wie noch keine fahrerspezifisch aufgenommenen Daten vorangegangener Fahrten vorhanden sind.

Als Variante ist gemäß einer zehnten Möglichkeit vorgesehen, insoweit derartige Vorgabesollwerte und/oder Vorgabegrenzwerte der Fahrzeuglängsgeschwindigkeit für das erstmalige Befahren einer Strecke implizit aus den streckenspezifischen Daten einer digital abgespeicherten Wegenetzkarte abzuleiten, insbesondere abhängig von Straßenklasse, Ortsdurchfahrten und Fahrbahnkrümmung.

Aus den obigen Erläuterungen ergibt sich, daß die zehn genannten Möglichkeiten in der genannten Reihenfolge immer weniger fahrerspezifisch sind. Um Speicherplatz einzusparen, ist es ausreichend, nur die Geschwindigkeitsdaten für die jeweils spezifischste realisierte Möglichkeit abzuspeichern und beim erneuten Befahren der Strecke abzurufen. Die vierte, sechste und achte Realisierungsvariante erlauben ein komfortables, von Einzelereignissen relativ unabhängiges Geschwindigkeitsvorgabeverhalten, wobei statt des genannten 90%-Percentilwerts selbstverständlich auch ein anderer Prozentsatzwert gewählt werden kann. Besonders einfach realisierbar ist die obige erste Möglichkeit, bei welcher der Fahrer nur explizit den von ihm gewünschten Sollwert und/oder Grenzwert abspeichern braucht. Dies stellt eine besonders einfach verständliche und mit minimalem Speicheraufwand realisierbare Variante dar. Es versteht sich, daß jede andere Kombination der erwähnten Möglichkeiten für die Realisierung der Geschwindigkeitsvorgabefunktionalität im Rahmen des erfindungsgemäßen Verfahrens und der erfindungsgemäßen Vorrichtung realisierbar ist, wie sie in den beigefügten Ansprüchen definiert sind.

## Patentansprüche

1. Verfahren zur Steuerung der Längsgeschwindigkeit eines Kraftfahrzeuges, bei dem
- die Fahrzeugposition ermittelt und für die Steuerung der Fahrzeuglängsgeschwindigkeit ein Geschwindigkeitsvorgabesollwert und/oder ein Geschwindigkeitsvorgabegrenzwert in Abhängigkeit von der ermittelten Fahrzeugposition vorgegeben wird, wobei Geschwindigkeitsdaten über den Istwert und/oder einen eingestellten Sollwert und/oder einen eingestellten Grenzwert der Fahrzeuglängsgeschwindigkeit in Abhängigkeit von der Fahrzeugposition erfaßt werden und der Geschwindigkeitsvorgabesollwert und/oder Geschwindigkeitsvorgabegrenzwert aus den für die jeweilige Fahrzeugposition während einer oder mehrerer vorheriger Fahrten erfaßten Geschwindigkeitsdaten ermittelt wird, wobei die erfaßten Geschwindigkeitsdaten selbst und/oder die Daten über den daraus ermittelten Geschwindigkeitsvorgabesollwert und/oder Geschwindigkeitsvorgabegrenzwert abrufbar abgespeichert werden,
**dadurch gekennzeichnet, daß**
zur Vorgabe des Geschwindigkeitsvorgabesollwertes und/oder Geschwindigkeitsvorgabegrenzwertes ein vorgebbarer Percentilwert aus mehreren, für die entsprechende Fahrzeugposition während vorheriger Fahrten erfaßten Istgeschwindigkeitswerten oder Sollgeschwindigkeitswerten insgesamt oder selektiv nur aus denjenigen bei freier Fahrt bzw. Grenzgeschwindigkeitswerten herangezogen wird.

2. Verfahren nach Anspruch 1, weiter
**dadurch gekennzeichnet, daß**
das Abspeichern der Geschwindigkeitsdaten und das Vorgeben des Geschwindigkeitsvorgabesollwertes und/oder Geschwindigkeitsvorgabegrenzwertes in Abhängigkeit einer oder mehrerer, variabler, sensierter Geschwindigkeitseinflußgrößen klassifiziert erfolgt.

3. Verfahren nach Anspruch 1 oder 2, weiter
**dadurch gekennzeichnet, daß**
zur Vorgabe des Geschwindigkeitsvorgabesollwertes und/oder Geschwindigkeitsvorgabegrenzwertes explizit streckenabhängig vorab abgespeicherte Vorgabewerte oder implizit aus Daten einer digital abgespeicherten Wegenetzkarte ermittelte Vorgabewerte für solche Streckenabschnitte herangezogen werden, für die noch keine auswertbaren erfaßten Geschwindigkeitsdaten aus einer vorherigen Fahrt vorliegen.

4. Verfahren nach einem der Ansprüche 1 bis 3, weiter
**dadurch gekennzeichnet, daß**
zur Vorgabe des Geschwindigkeitsvorgabesollwertes und/oder Geschwindigkeitsvorgabegrenzwertes jeweils einer von mehreren Vorgaberohwerten, die parallel durch unterschiedliche Auswertung von erfaßten Geschwindigkeitsdaten vorangegangener Fahrten und/oder von explizit vorab abgespeicherten oder implizit aus vorab abgespeicherten Wegenetzdaten abgeleiteten Geschwindigkeitsdaten gewonnen werden, gemäß einer vorgebbaren Prioritätsliste herangezogen wird.

5. Verfahren nach einem der Ansprüche 1 bis 4, weiter
**dadurch gekennzeichnet, daß**
die Erfassung der Geschwindigkeitsdaten und/oder die Vorgabe des Geschwindigkeitsvorgabesollwertes und/oder Geschwindigkeitsvorgabegrenzwertes benutzerspezifisch und/oder übertragbar erfolgt.

6. Vorrichtung zur Steuerung der Längsgeschwindigkeit eines Kraftfahrzeuges, mit
- Fahrzeugpositionsbestimmungsmitteln (11) und
- Längsgeschwindigkeitssteuermitteln (1 bis 10) zur Steuerung der Fahrzeuglängsgeschwindigkeit gemäß eines abhängig von der Fahrzeugposition vorgegebenen Geschwindigkeitsvorgabesollwertes und/oder Geschwindigkeitsvorgabegrenzwertes, wobei die Längsgeschwindigkeitssteuermittel Geschwindigkeitsvorgabemittel (9, 10) umfassen, welche Geschwindigkeitsdaten über den Istwert und/oder einen eingestellten Sollwert und/oder einen eingestellten Grenzwert der Längsgeschwindigkeit in Abhängigkeit von der Fahrzeugposition erfassen und den Geschwindigkeitsvorgabesollwert und/oder Geschwindigkeitsvorgabegrenzwert aus den für die jeweilige Fahrzeugpositon während einer oder mehrerer vorheriger Fahrten erfaßten Geschwindigkeitsdaten ermitteln, wobei sie Speichermittel (10) zur Speicherung der erfaßten Geschwindigkeitsdaten selbst und/oder der daraus ermittelten Vorgabesollwert- bzw. Vorgabegrenzwertdaten beinhalten,
**dadurch gekennzeichnet, daß**
die Geschwindigkeitsvorgabemittel (9, 10) zur Vorgabe des Geschwindigkeitsvorgabesollwertes und/oder Geschwindigkeitsvorgabegrenzwertes einen vorgebbaren Percentilwert aus mehreren zuvor für die entsprechende Fahrzeugposition ingesamt oder nur bei freier Fahrt erfaßten Istgeschwindigkeitswerten oder Sollgeschwindigkeitswerten bzw. Grenzgeschwindigkeitswerten heranziehen.

7. Vorrichtung nach Anspruch 6, weiter
**dadurch gekennzeichnet, daß**
Sensormittel zur Erfassung einer oder mehrerer variabler Geschwindigkeitseinflußgrößen vorgesehen sind und die Geschwindigkeitsvorgabemittel (9, 10) das Aufzeichnen der relevanten Daten und das Vorgeben des Geschwindigkeitsvorgabesollwertes und/oder Geschwindigkeitsvorgabegrenzwertes getrennt nach verschiedenen Klassen dieser Einflußgrößen vornehmen.

8. Vorrichtung nach Anspruch 6 oder 7, weiter
**dadurch gekennzeichnet, daß**
die Geschwindigkeitsvorgabemittel (9, 10) zur Vorgabe des Geschwindigkeitsvorgabesollwertes und/oder Geschwindigkeitsvorgabegrenzwertes vorab abgespeicherte Vorgabewerte und/oder aus vorab abgespeicherten Wegenetzdaten ermittelte Vorgabewerte heranziehen, solange für die jeweilige Fahrzeugposition keine erfaßten Geschwindigkeitsdaten vorheriger Fahrten auswertbar vorliegen.

9. Vorrichtung nach einem der Ansprüche 6 bis 8, weiter
**dadurch gekennzeichnet, daß**
die Geschwindigkeitsvorgabemittel (9, 10) das Erfassen der Geschwindigkeitsdaten und das Vorgeben des Geschwindigkeitsvorgabesollwertes und/oder Geschwindigkeitsvorgabegrenzwertes fahrerspezifisch und/oder übertragbar vornehmen und die Speichermittel (10) hierfür getrennte fahrzeugseitige Speicherbereiche oder Speichereinheiten und/oder getrennte benutzerseitige Speichereinheiten und/oder fahrzeugexterne, in verschiedenen Fahrzeugen auslesbare Speichereinheiten umfassen.

## Claims

1. A process for controlling the longitudinal speed of a motor vehicle in which,
- the position of the vehicle is determined and a default speed set-point value and/or a default speed limit value for controlling the longitudinal speed of the vehicle is set dependent upon the vehicle position determined, speed data on the actual value and/or a set-point value and/or a set limit value of the longitudinal speed of the vehicle being recorded dependent upon the vehicle position and the default speed set-point value and/or default speed limit value being calculated from the speed data recorded for the vehicle position in question during one or more previous journeys, the recorded speed data itself and/or the data on the default speed set-point value and/or default speed limit value calculated on the basis thereof being stored in such a manner that it can be retrieved,
**characterised in that**
a pre-determinable percentile value based on several actual speed values or reference speed values recorded for the vehicle position in question over previous journeys, either as a whole or a selection of those recorded during free driving mode and/or speed limit values, is used to set the default speed set-point value and/or default speed limit value.

2. A process in accordance with claim 1, further
**characterised in that**
the speed data is stored and the default speed set-point value and/or default speed limit value are set classified according to one or more variable, sensor-measured speed influencing variable.

3. A process in accordance with claim 1 or 2, further
**characterised in that**
default values stored explicitly in advance for a specific route or default values determined implicitly on the basis of data from a digitally stored road network map for sections of routes for which no speed data recorded on a previous journey is available for evaluation are used to set the default speed set-point value and/or default speed limit value.

4. A process in accordance with one of claims 1 to 3, further
**characterised in that**
one of several raw default values obtained in parallel by various evaluations of speed data recorded during previous journeys and/or from speed data stored explicitly in advance or derived implicitly from previously stored road network data are used in accordance with a predeterminable list of priorities to set the default speed set-point value and/or default speed limit value.

5. A process in accordance with one of claims 1 to 4, further
**characterised in that**
the speed data is recorded and/or the default speed set-point value and/or default speed limit value are set user-specifically and/or transferably.

6. A device for controlling the longitudinal speed of a motor vehicle, with
- vehicle position determination means (11) and
- longitudinal speed control means (1 to 10) to control the longitudinal speed of the vehicle in accordance with a default speed set-point value and/or a default speed limit value set dependent upon the position of the vehicle, the longitudinal speed control means comprising default speed setting means (9, 10) which record speed data on the actual value and/or a set-point value and/or a set limit value for the longitudinal speed dependent upon the vehicle position and calculate the default speed set-point value and/or the default speed limit value from the speed data recorded for the vehicle position in question during one or more previous journeys and also containing storage means (10) to store the recorded speed data itself and/or the default set-point value and default limit value data calculated therefrom,
**characterised in that**
the default speed setting means (9, 10) which set the default speed set-point value and/or default speed limit value use a pre-determinable percentile value based on several actual speed values or set-point speed values/limit speed values previously recorded for the vehicle position in question, either as a whole or a selection of those recorded during free driving mode.

7. A device in accordance with claim 6, further
**characterised in that**
sensor means to record one or more variable speed influencing values are provided and the default speed setting means (9, 10) record the relevant data and set the default speed set-point value and/or default speed limit value separately for various classes of these influencing variables.

8. A device in accordance with claim 6 or 7,
**characterised in that**
the default speed setting means (9, 10) uses previously stored default values and/or default values calculated from previously stored road network data to set the default speed reference value and/or default speed limit value where no speed data recorded for the vehicle position in question on previous journeys is available for evaluation.

9. A device in accordance with one of claims 6 to 8,
**characterised in that**
the default speed setting means (9, 10) record the speed data and set the default reference value and/or default speed limit value driver-specifically and/or transferably and for this purpose the storage means (10) comprise separate storage areas or storage units on the vehicle and/or separate user-specific storage units and/or storage units external to the vehicle which can be read out in various vehicles.

## Revendications

1. Procédé de commande de la vitesse longitudinale d'un véhicule automobile, dans lequel
- on détermine la position du véhicule et, pour la commande de la vitesse longitudinale de véhicule, on prédétermine une valeur de consigne d'affectation de vitesse et/ou une valeur limite d'affectation de vitesse, en fonction de la position déterminée du véhicule, sachant que des données de vitesse sont appréhendées par l'intermédiaire de la valeur réelle et/ou d'une valeur de consigne réglée et/ou d'une valeur limite réglée de la vitesse longitudinale du véhicule, en fonction de la position du véhicule et la valeur de consigne d'affectation de vitesse et/ou la valeur limite d'affectation de vitesse sont déterminées à partir des données de vitesse, appréhendées pendant un ou plusieurs trajets de roulage précédents, pour la position de véhicule respective, et que les données de vitesse appréhendées elles-mêmes et/ou les données concernant la valeur de consigne d'affectation de vitesse et/ou la valeur limite d'affectation de vitesse, déterminées à partir de cela sont mémorisés d'une façon permettant une interrogation,
**caractérisé en ce que**,
pour l'affectation de la valeur de consigne d'affectation de vitesse et/ou de la valeur limite d'affectation de vitesse, on utilise une valeur de pourcentage pouvant être prédéterminée, formée à partir de plusieurs valeurs de vitesse réelles ou de valeurs de vitesse de consigne, déterminées pendant des roulages précédents, pour la position de roulage respective, globalement ou, sélectivement, uniquement à partir de celles que l'on a en roulage libre ou à partir des valeurs de vitesse limites.

2. Procédé selon la revendication 1, **caractérisé en outre en ce que**, la mémorisation des données de vitesse et l'affectation de la valeur de consigne d'affectation de vitesse et/ou de la valeur de la limite d'affectation, s'effectuant de façon classifiée en fonction d'une ou plusieurs grandeurs d'influence sur la vitesse, détectées, variables.

3. Procédé selon la revendication 1 ou 2, **caractérisé en outre en ce que**, pour l'affectation de la valeur de consigne d'affectation de vitesse et/ou de la valeur limite d'affectation de vitesse, on utilise des valeurs d'affectation ayant été mémorisées préalablement de façon explicite selon le trajet, ou bien des valeurs d'affectation déterminées de façon implicite à partir de données d'une carte de réseau routier mémorisée de façon numérique, pour des parties de trajet pour lesquelles on dispose encore d'aucune donnée de vitesse, détectée, pouvant être évaluée, issue d'un déplacement précédent.

4. Procédé selon l'une des revendications 1 à 3, **caractérisé en outre en ce que**, pour l'affectation de la vitesse de consigne d'affectation de vitesse et/ou de la. vitesse limite d'affectation de vitesse, on utilise chaque fois l'une parmi plusieurs valeurs brutes d'affectation, obtenues parallèlement par une évaluation différente de données de vitesse détectées, lors de trajets précédents et/ou de données de vitesse mémorisées préalablement de façon explicite ou dérivées de façon implicite d'après des données de réseaux routiers mémorisés, selon une liste de priorités prédéterminable.

5. Procédé selon l'une des revendications 1 à 4, **caractérisé en ce que** la détection des données de vitesse et/ou l'affectation de la valeur de consigne d'affectation de vitesse et/ou de la valeur limite d'affectation de vitesse s'effectue(nt) de façon spécifique à l'utilisateur et/ou de façon permettant une transmission.

6. Dispositif de commande de la vitesse longitudinale d'un véhicule automobile, comportant
- des moyens de détermination de position de véhicule (11), et
- des moyens de commande de vitesse longitudinale (1 à 10), pour commander la vitesse longitudinale du véhicule selon une valeur de consigne d'affectation de vitesse et/ou une valeur limite d'affectation de vitesse prédéterminées en fonction de la position du véhicule, les moyens de commande de vitesse longitudinale comprenant des moyens d'affection de vitesse (9, 10) qui détectent des données de vitesse concernant la valeur réelle et/ou une valeur de consigne réglée et/ou une valeur limite réglée de la vitesse longitudinale, en fonction de la position du véhicule, et qui déterminent la valeur de consigne d'affectation de vitesse et/ou la valeur limite d'affectation de vitesse, à partir des données de vitesse détectées pour la position de véhicule respective pendant un ou plusieurs trajets précédents, sachant qu'ils contiennent des moyens de mémorisation (10) pour mémoriser les données de vitesse détectées elles-mêmes et/ou les données de valeur de consigne d'affectation, respectivement les données de valeur limite d'affectation, déterminées à partir de cela,
**caractérisé en ce que**,
pour affecter la valeur de consigne d'affectation de vitesse et/ou la valeur limite d'affectation de vitesse, les moyens d'affectation de vitesse (9, 10) utilisent une valeur de pourcentage prédéterminable, formée à partir de plusieurs valeurs de vitesse réelles ou de valeurs de consigne de vitesse ou de valeurs limites de vitesse, détectées préalablement pour la position du véhicule correspondante, globalement ou bien uniquement dans le cas de roulage libre.

7. Dispositif selon la revendication 6, **caractérisé en ce que** des moyens capteurs sont prévus pour détecter une ou plusieurs grandeurs d'influence de vitesse variables et les moyens d'affection de vitesse (9, 10) procédent à l'enregistrement des données afférentes et à l'affectation de la valeur de consigne d'affectation de vitesse et/ou de la valeur limite d'affectation de vitesse, séparément, selon différentes classes de ces grandeurs d'influence.

8. Dispositif selon la revendication 6 ou 7, **caractérisé en outre en ce que** les moyens d'affectation de vitesse (9, 10), prévus pour affecter la valeur de consigne d'affectation de vitesse et/ou la valeur limite d'affectation de vitesse, utilisent des valeurs d'affectation mémorisées préalablement et/ou des valeurs d'affectation déterminées à partir de données de réseau routier mémorisées préalablement, tant qu'aucune donnée de vitesse de roulage précédent détectés n'existe, pouvant être évalués, pour la position respective du véhicule.

9. Dispositif selon l'une des revendications 6 à 8, **caractérisé en outre en ce que** les moyens d'affectation de vitesse (9, 10) procèdent à la détection des données de vitesse et à l'affectation de la valeur de consigne d'affectation de vitesse et/ou la valeur limite d'affectation de vitesse, de façon spécifique au conducteur et/ou pouvant être l'objet d'une transmission, et les moyens de mémorisation (10) comprennent pour cela des moyens de mémoire ou des unités de mémoire montés côté véhicule, séparés, et/ou des unités de mémoire côté utilisateur séparées et/ou des unités de mémoire externes au véhicule, pouvant être lues dans des véhicules différents.
